(19) Europäisches Patentamt

European Patent Office

Office européen des brevets

(11) **EP 1 307 041 A2**

(12) **EUROPEAN PATENT APPLICATION**

(43) Date of publication:
02.05.2003 Bulletin 2003/18

(51) Int Cl.⁷: **H04N 1/405**

(21) Application number: 02022346.7

(22) Date of filing: 08.10.2002

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: 29.10.2001 JP 2001330852
25.04.2002 JP 2002124628

(71) Applicant: **FUJI PHOTO FILM CO., LTD.
Kanagawa-ken, 250-0193 (JP)**

(72) Inventor: **Sugizaki, Makoto,
Fuji Photo Film Co., Ltd.
Ashigarakami-gun, Kanagawa-ken 258-8538 (JP)**

(74) Representative: **Klunker . Schmitt-Nilson . Hirsch
Winzererstrasse 106
80797 München (DE)**

(54) **Image halftoning using threshold data**

(57)     A halftone threshold pattern comprising a clustered-dot ordered array of halftone threshold data is generated (step S1), and an array of halftone threshold data between a plurality of halftone threshold patterns is determined to generate an auxiliary multiple halftone threshold pattern (steps S2, S3). Then, an array of halftone threshold data between a plurality of auxiliary multiple halftone threshold patterns is determined as a dispersed-dot ordered array to generate a multiple halftone threshold pattern (steps S4, S5).

FIG. 6

## Description

BACKGROUND OF THE INVENTION

Field of the Invention:

The present invention relates to a method of generating halftone threshold data for converting continuous gradation image data into halftone image data, an apparatus for generating a halftone image, and a recording medium for recording halftone threshold data thereon.

Description of the Related Art:

Halftone image generating apparatus compare continuous gradation image data obtained from an original image with halftone threshold data to produce binary or multivalued halftone image data, and control a laser beam or the like according to the halftone image data to output a halftone image on a recording medium such as a print sheet, a film, or the like.

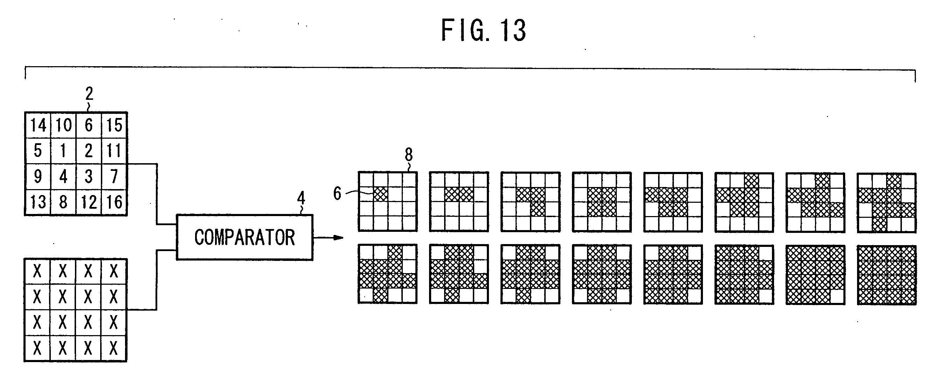

FIG. 13 of the accompanying drawings illustrates a process of generating a halftone image using a clustered-dot ordered halftone threshold pattern 2 in a halftone image generating apparatus. According to the illustrated process, halftone threshold data having values 1 through 16 of the halftone threshold pattern 2 are compared with continuous gradation image data having values X by a comparator 4, and pixels 6 corresponding to those continuous gradation image data having values greater than the halftone threshold data are blackened to produce dot cells 8 of 17 gradations including X = 0.

The clustered-dot ordered halftone threshold pattern 2 have halftone threshold data arranged such that they are progressively greater from the center toward the periphery thereof. As the density of the dot cells 8 increases, more adjacent pixels 6 are successively produced. Therefore, the dot gain does not sharply increases on a recording medium, and a halftone image close to a desired blackened area can be produced in a high density range.

However, since the size of one dot cell 8 produced according to the halftone threshold pattern 2, i. e., the lower limit of a screen ruling is limited, the number of gradations determined by the halftone threshold data of the halftone threshold pattern 2 cannot sufficiently be increased.

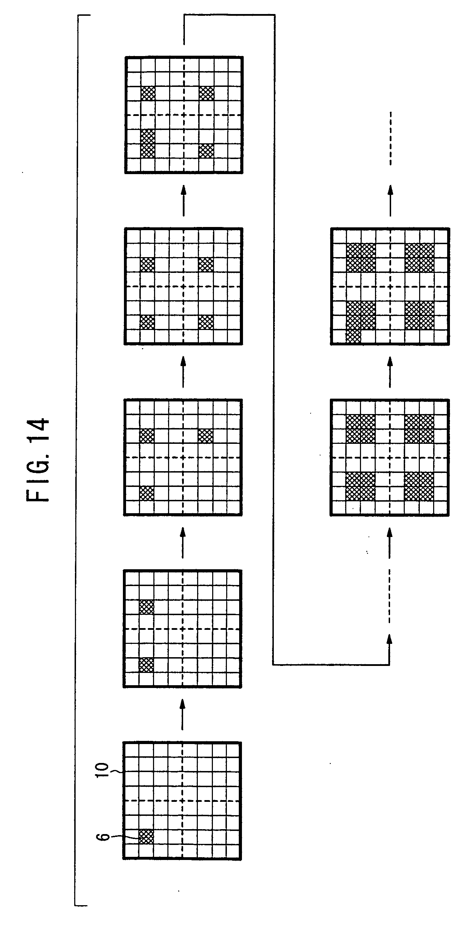

To avoid the above drawback, it has been proposed to generate a multidot cell 10, as shown in FIG. 14 of the accompanying drawings, having 65 gradations using four halftone threshold patterns each having halftone threshold data arranged according to the same rule as the halftone threshold data of the halftone threshold pattern 2 which has 17 gradations.

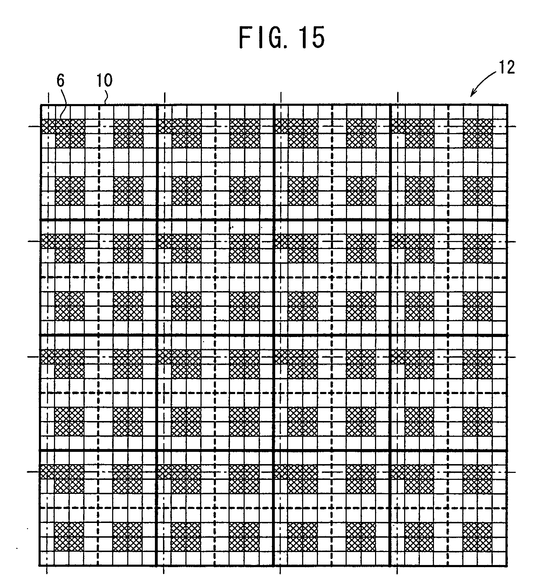

According to the proposed process shown in FIG. 14, because a halftone image 12 comprises a number of multidot cells 10 having the same pattern, as shown in FIG. 15 of the accompanying drawings, the halftone image 12 may contain periodic density irregularities as indicated by the dot-and-dash lines in particular density areas depending on the output resolution of the halftone image generating apparatus.

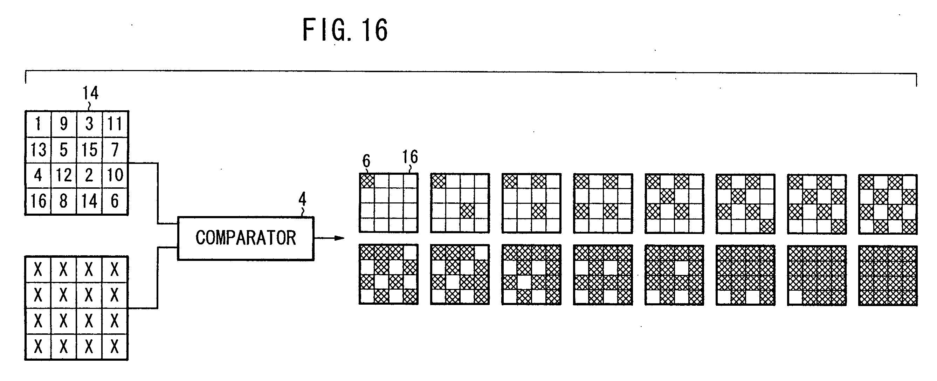

One process of minimizing such periodic density irregularities uses a dispersed-dot ordered halftone threshold pattern 14 shown in FIG. 16 of the accompanying drawings. A typical example of the dispersed-dot ordered halftone threshold pattern is the Bayer array of halftone threshold data which takes into account the spatial frequency characteristics of vision.

The dispersed-dot ordered halftone threshold pattern 14 contains halftone threshold data arranged such that the spatial frequency characteristics of pixels 6 of dot cells 16 are in a high frequency range. The dispersed-dot ordered halftone threshold pattern 14 is advantageous in that periodic density irregularities are less visible because the pixels 6 have lower periodicity.

According the process using the dispersed-dot ordered halftone threshold pattern 14 shown in FIG. 16, however, inasmuch as the pixels 6 are dispersed, the dot gain of the pixels 6 on the recording medium has a greater effect than with the clustered-dot ordered halftone threshold pattern 2, and cannot easily be controlled. The dispersed arrangement of the pixels 6 tends to produce a halftone image having a graininess in a low density region.

SUMMARY OF THE INVENTION

It is a general object of the present invention to provide a method of generating halftone threshold data, an apparatus for generating a halftone image, and a recording medium which make it possible to render periodic density irregularities less visible and to easily generate high-gradation, high-quality halftone images.

A major object of the present invention is to provide a method of generating halftone threshold data, an apparatus for generating a halftone image, and a recording medium which are capable of suppressing a density increase due to the effect of a dot gain and turning a high-density region of a halftone image into a desired gradation.

Another object of the present invention is to provide a method of generating halftone threshold data, an apparatus for generating a halftone image, and a recording medium which make it possible to produce a high-quality halftone image free of graininess.

To achieve the above objects, there is provided in accordance with the present invention a method of generating halftone threshold data for converting continuous gradation image into halftone image data, comprising the steps of generating a clustered-dot ordered array of halftone threshold data making up halftone threshold patterns, and generating a dispersed-dot ordered array, between the halftone threshold patterns, of halftone threshold data making up a multiple halftone threshold pattern which is a collection of the halftone threshold patterns.

Since the array of halftone threshold data between the clustered-dot ordered patterns of halftone threshold data is a dispersed-dot ordered multiple halftone threshold pattern, it is possible to generate high-gradation, high-quality halftone images, and periodic density irregularities are made less visible in generated halftone images due to the dispersed-dot ordered array of halftone threshold data.

Because an array of halftone threshold data of a minimum unit is a clustered-dot ordered pattern of halftone threshold data, when a high-density halftone image is generated, the halftone image suffers a small density increase due to the effect of a dot gain and has desired gradations, and is of a high quality free of graininess which is inherent with a dispersed-dot ordered pattern of halftone threshold data.

Furthermore, any periodic density irregularities in a halftone image generated according to a multiple halftone threshold pattern are made sufficiently less visible.

The dispersed-dot ordered array of halftone threshold data should preferably be an array depending on the spatial frequency characteristics of vision, called an FM screen (see Japanese laid-open patent publications Nos. 8-265566 and 8-274991). The Bayer array is one of FM screens.

The multiple halftone threshold pattern can be produced by collecting auxiliary multiple halftone threshold patterns each produced by collecting a plurality of halftone threshold patterns, for thereby increasing the number of gradations that can be expressed.

According to the present invention, there is also provided an apparatus for generating a halftone image by converting continuous gradation image into halftone image data using halftone threshold data, comprising a halftone threshold data memory for storing halftone threshold data of a dispersed-dot ordered multiple halftone threshold pattern, between halftone threshold patterns, of halftone threshold data composed of a collection of halftone threshold patterns each comprising a clustered-dot ordered array of halftone threshold data, and an image data converter for converting the continuous gradation image into the halftone image data with the halftone threshold data.

If the apparatus has an output resolution ranging from 1000 to 1300 dots per inch and a screen ruling ranging from 150 to 200 lines per inch, then the number of halftone threshold data making up one halftone threshold pattern is in the range from 4 to 100 and the size of dot cells produced according the one halftone threshold pattern is smaller than 0.5 mm.

According to the present invention, there is further provided a recording medium for recording halftone threshold data for converting continuous gradation image into halftone image data, the halftone image data comprising a dispersed-dot ordered multiple halftone threshold pattern, between halftone threshold patterns, of halftone threshold data composed of a collection of halftone threshold patterns each comprising a clustered-dot ordered array of halftone threshold data.

The above and other objects, features, and advantages of the present invention will become more apparent from the following description when taken in conjunction with the accompanying drawings in which a preferred embodiment of the present invention is shown by way of illustrative example.

BRIEF DESCRIPTION OF THE DRAWINGS

FIG. 1 is a flowchart of a method of generating halftone threshold data according to the present invention;

FIG. 2 is a diagram showing a clustered-dot ordered halftone threshold pattern which serves as a minimum unit of halftone threshold data;

FIG. 3 is a diagram of an auxiliary multiple halftone threshold pattern which is a collection of clustered-dot ordered halftone threshold patterns each serving as a minimum unit of halftone threshold data;

FIG. 4 is a diagram of a multiple halftone threshold pattern which is a collection of auxiliary multiple halftone threshold patterns of halftone threshold data and is arranged as a Bayer array of dispersed-dot ordered halftone threshold data;

FIG. 5 is a block diagram of a halftone image generating apparatus according to the present invention;

FIG. 6 is a diagram showing a halftone image generated by the halftone image generating apparatus according to the present invention;

FIGS. 7 and 8 are a flowchart of a process of successively selecting auxiliary multiple halftone threshold patterns spaced at largest distances to determine an array;

FIG. 9 is a flowchart of a subroutine in the process shown in FIGS. 7 and 8;

FIG. 10 is a diagram showing nine threshold matrixes and initial thresholds set therein;

FIG. 11 is a diagram of a $7 \times 7$ dispersed-dot ordered halftone threshold data pattern which is produced by carrying out the process shown in FIGS. 7 through 9;

FIG. 12 is a diagram of a multiple halftone threshold pattern which is a collection of auxiliary multiple halftone threshold patterns of halftone threshold data and is arranged as an array of dispersed-dot ordered halftone threshold data as shown in FIG. 11;

FIG. 13 is a diagram showing a clustered-dot ordered halftone threshold pattern and halftone images generated using the clustered-dot ordered halftone threshold pattern;

FIG. 14 is a diagram showing halftone images generated using a plurality of clustered-dot ordered halftone threshold patterns;

FIG. 15 is a diagram showing periodic density irregularities which appear in a halftone image which is generated using a plurality of clustered-dot ordered halftone threshold patterns; and

FIG. 16 is a diagram showing a dispersed-dot ordered halftone threshold pattern and halftone images generated using the dispersed-dot ordered halftone threshold pattern.

DESCRIPTION OF THE PREFERRED EMBODIMENT

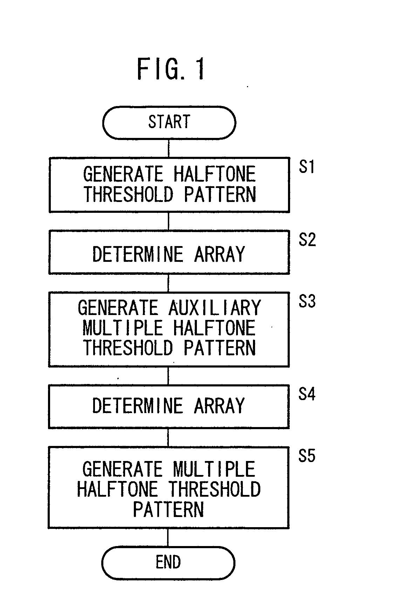

A method of generating halftone threshold data, an apparatus for generating a halftone image, and a recording medium according to the present invention will be described below with reference to FIGS. 1 through 12. Those parts shown in FIGS. 1 through 12 which are identical to those shown in FIGS. 13 through 16 are denoted by identical reference characters, and will not be described in detail below. For the sake of brevity, FIGS. 13 through 16 will also be referred to in the description of the present invention.

FIG. 1 illustrates a method of generating halftone threshold data according to the present invention. The method of generating halftone threshold data according to the present invention will be described below with reference to FIG. 1.

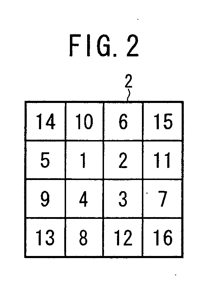

First, a halftone threshold pattern 2 which is a basic unit of halftone threshold data making up one dot cell shown in FIG. 2 is generated in step S1. The halftone threshold pattern 2 is clustered-dot ordered with the halftone threshold data that are progressively greater from the center toward the periphery thereof, as shown in FIG. 13.

Then, an array of halftone threshold data that make up an auxiliary multiple halftone threshold pattern 18 composed of four halftone threshold patterns 2a through 2d is determined according to the array of halftone threshold data of the halftone threshold pattern 2 in step S2. Each of the halftone threshold patterns 2a through 2d comprises 4 × 4 halftone threshold data.

The array of halftone threshold data that make up the auxiliary multiple halftone threshold pattern 18 is determined by, for example, repeating a process of setting halftone threshold data 1 through 4 in a given sequence at corresponding positions in the halftone threshold patterns 2a through 2d where halftone threshold data 1 in the halftone threshold pattern 2 are set, and setting halftone threshold data 5 through 8 in a given sequence at corresponding positions in the halftone threshold patterns 2a through 2d where halftone threshold data 2 in the halftone threshold pattern 2 are set.

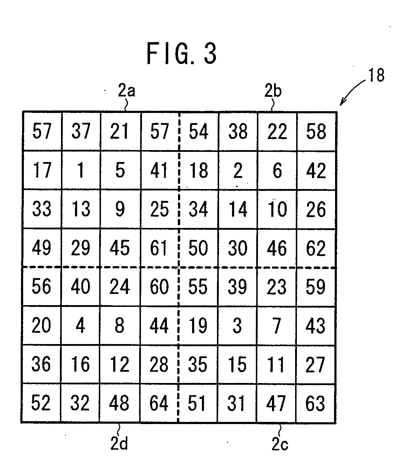

After the array of halftone threshold data is determined, halftone threshold data of the auxiliary multiple halftone threshold pattern 18 are generated according to the determined array of halftone threshold data, as shown in FIG. 3, in step S3. The auxiliary multiple halftone threshold pattern 18 thus generated can express a halftone image of 65 gradations.

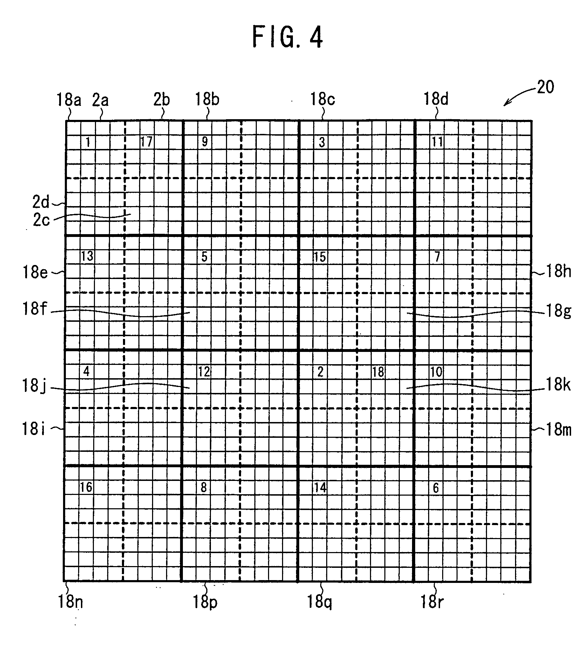

Then, using the array of halftone threshold data of the auxiliary multiple halftone threshold pattern 18 as a reference, an array of halftone threshold data of a multiple halftone threshold pattern 20 comprising 16 auxiliary multiple halftone threshold patterns 18a through 18r shown in FIG. 4 is determined in step S4.

The array of halftone threshold data between the auxiliary multiple halftone threshold patterns 18a through 18r is established as a dispersed-dot ordered array which serves as an FM screen such as a Bayer array or the like. If the Bayer array is employed, then the auxiliary multiple halftone threshold pattern 18a corresponding to the position where the halftone threshold data 1 is set in the halftone threshold pattern 14 shown in FIG. 16 is selected. Then, the position where the halftone threshold data 1 is set in the auxiliary multiple halftone threshold pattern 18 shown in FIG. 3 is selected, and the halftone threshold data 1 is set in the corresponding position in the auxiliary multiple halftone threshold pattern 18a. Then, the auxiliary multiple halftone threshold pattern 18k corresponding to the position where the halftone threshold data 2 is set in the halftone threshold pattern 14 shown in FIG. 16 is selected. Then, the position where the halftone threshold data 1 is set in the auxiliary multiple halftone threshold pattern 18 shown in FIG. 3 is selected, and the halftone threshold data 2 is set in the corresponding position in the auxiliary multiple halftone threshold pattern 18a. A process similar to the above process is repeated to determine the array of halftone threshold data as shown in FIG. 4.

After the array of halftone threshold data is determined, halftone threshold data of the multiple halftone threshold pattern 20 are generated according to the determined array of halftone threshold data in step S5. The multiple halftone threshold pattern 20 thus generated can express a halftone image of 1025 gradations.

A dispersed-dot ordered array of halftone threshold data depending on the spatial frequency characteristics of vision can be determined by successively selecting the auxiliary multiple halftone threshold patterns 18a through 18r spaced at largest distances, for example. A process of determining such a dispersed-dot ordered array of halftone threshold data will be described later on.

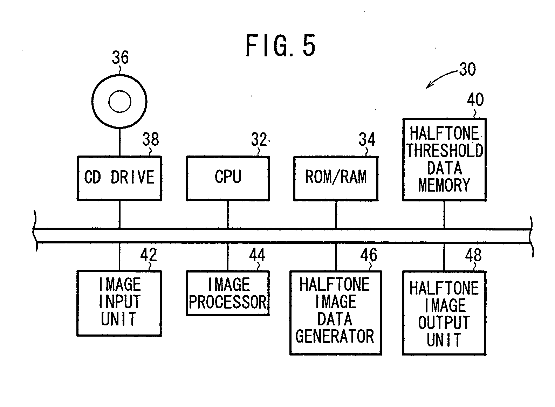

FIG. 5 shows in block form a halftone image generating apparatus 30 for generating a halftone image using the multiple halftone threshold pattern 20 thus generated.

As shown in FIG. 5, the halftone image generating apparatus 30 has a CPU (Central Processing Unit) 32 for controlling the halftone image generating apparatus 30 in its entirety, a ROM/RAM (Read Only Memory/Random Access Memory) 34 for storing programs and various processing data, and a CD drive 38 for driving a CD-ROM (Compact Disk - Read Only Memory) 36 which is a recording medium for recording the multiple halftone threshold pattern 20.

The CD drive 38 reads the multiple halftone threshold pattern 20 from the CD-ROM 36, and stores the multiple halftone threshold pattern 20 in a halftone threshold data memory 40. An image input unit 42 reads the image information of an original image and supplies the read image information as continuous gradation image data to an image processor 44. The image processor 44 processes the supplied continuous gradation image data as desired. A halftone image data generator 46 reads halftone threshold data according to a desired screen angle and screen ruling from the halftone threshold data memory 40, and compares the processed continuous gradation image data with the halftone threshold data to produce halftone image data. A halftone image output unit 48 generates a laser beam or the like based on the halftone image data to output a halftone image on a recording medium such as a film or the like.

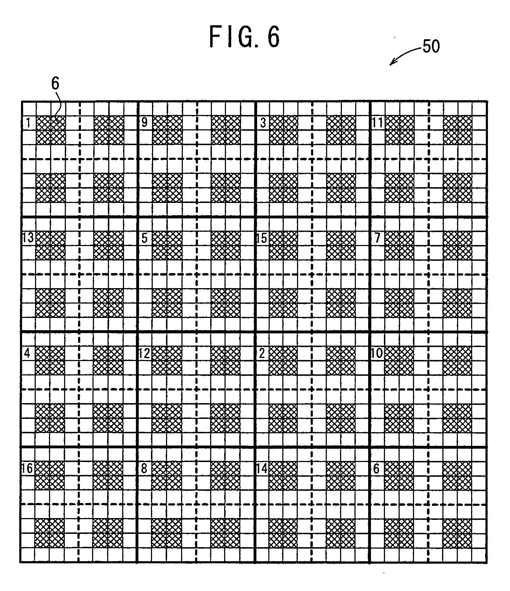

FIG. 6 shows a halftone image 50 comprising a region which corresponds to the multiple halftone threshold pattern 20 of the 256th gradation which is outputted from halftone image generating apparatus 30 using the multiple halftone threshold pattern 20 which is capable of representing 1025 gradations. A multiple halftone threshold pattern 20 of the 257th gradation is produced and outputted by blackening the pixel 6 denoted by the numeral "1" in FIG. 6. As the gradation grows, the pixels 6 indicated by numerals applied according to the rule of the dispersed-dot ordered array are blackened and outputted.

At this time, periodic density irregularities as indicated by the dot-and-dash lines in FIG. 15 appear with a probability which is 1/16 of the probability when the halftone image 12 is generated as shown in FIG. 14. Therefore, such periodic density irregularities can virtually be ignored.

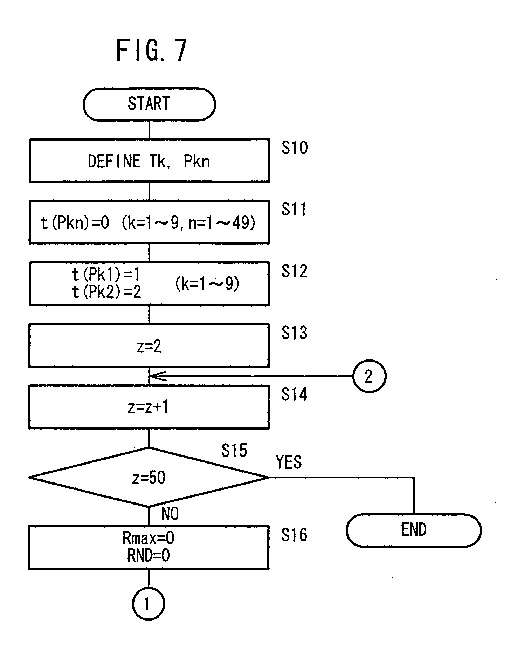

A process of determining a dispersed-dot ordered array of halftone threshold data depending on the spatial frequency characteristics of vision by successively selecting auxiliary multiple halftone threshold patterns spaced at largest distances will be described in detail below with reference to a flowchart of FIGS. 7 through 9.

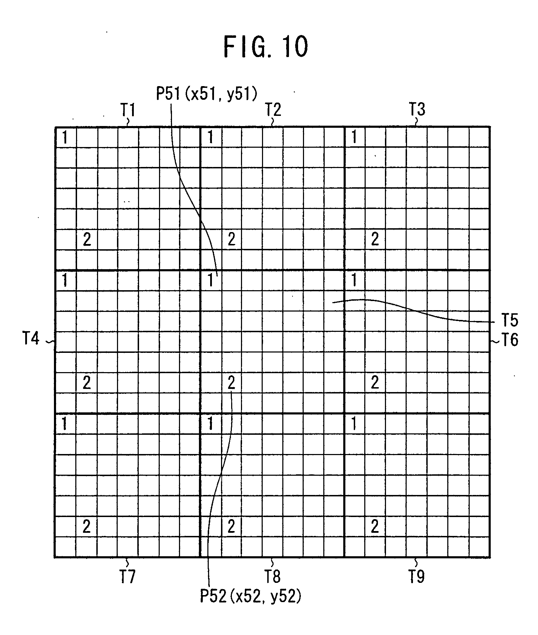

First, as shown in FIG. 10, a 7 × 7 threshold matrix T5 and surrounding matrixes T1 through T4, T6 through T9, each identical to the 7 × 7 threshold matrix T5, are defined. The threshold matrix T5 may be determined as a 4 × 4 threshold matrix as shown in FIG. 2.

In step S10 shown in FIG. 7, each of the threshold matrixes Tk (k = 1 through 9) and pixel points Pkn of 49 halftone threshold data t(Pkn) (k = 1 through 9, n = 1 through 49, t = 1 through 49) of each of the threshold matrixes Tk are defined. Each of the pixel points Pkn has an x coordinate xkn and a y coordinate ykn.

In step S11, all the halftone threshold data t(Pkn) of each of the threshold matrixes Tk are set to 0. In step S12, two pixel points Pk1, Pk2 spaced at a suitable distance are selected from each of the threshold matrixes Tk, and, as shown in FIG. 10, halftone threshold data t(Pk1), t(Pk2) are set to initial values t(Pk1) = 1, t(Pk2) = 2.

Then, pixel points Pkn for setting halftone threshold data t(Pkn) 3 through 49 are determined. First, various parameters are set such as z = 3, a maximum value Rmax = 0 of the distance between two pixel points Pkn, a random number RND = 0, and i = 1 in steps S13 through S18. If the halftone threshold data t(P5i) = 0 (YES in step S20), then a minimum value Rmin(i) of the distance between the pixel point P5i and a pixel point Pkn positioned therearound in which halftone threshold data t(Pkn) has already been set is determined in step S21.

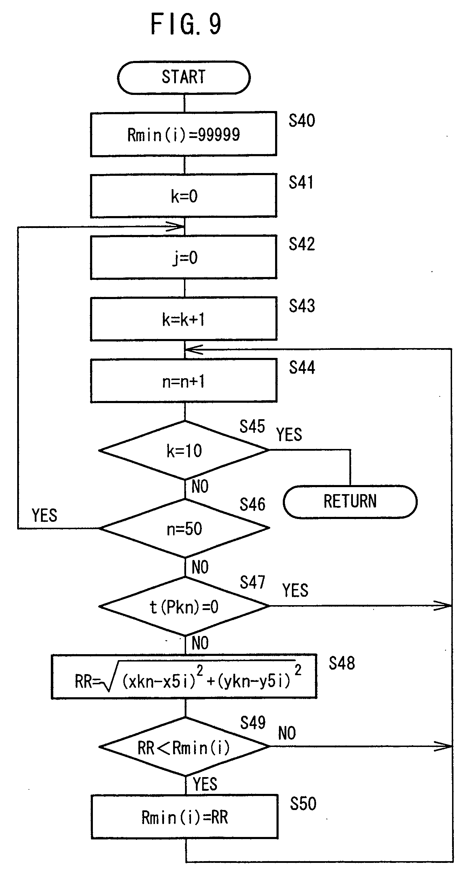

The minimum value Rmin(i) can be determined by a process according to a subroutine shown in FIG. 9. As shown in FIG. 9, after the minimum value Rmin(i) is set to an initial value of 99999 in step S40, control goes through steps S41, S42, S43, S44, S45, S46. Then, a pixel point Pkn in which halftone threshold data t(Pkn) other than 0 is set is extracted in step S47, and the distance RR between the extracted pixel point Pkn and the pixel point P5i is determined according to the following equation (1) in step S48:

$$RR = \sqrt{((xkn - x5i)^2 + (ykn - y5i)^2)} \qquad (1)$$

The distance RR thus determined is compared with the minimum value Rmin(i) in step S49. If RR < Rmin(i), then the minimum value Rmin(i) is set to Rmin(i) = RR in step S50. This process is performed on all pixel points Pkn where the halftone threshold data t(Pkn) of all the threshold matrixes Tk are not 0, thus determining the minimum value Rmin(i) between the pixel point P5i and the pixel point Pkn positioned therearound in which halftone threshold data t(Pkn) has already been set.

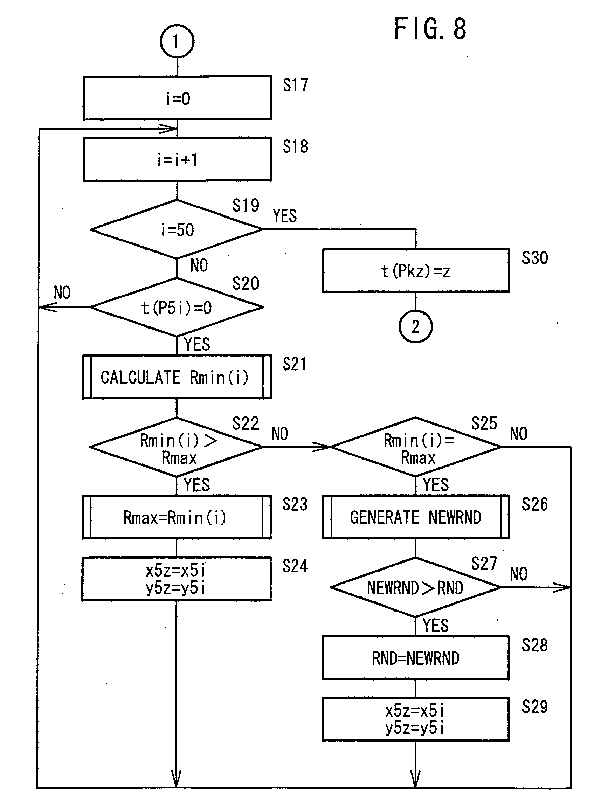

In FIG. 8, the minimum value Rmin(i) thus determined and the maximum value Rmax are compared with each other in steps S22, S25. Since the maximum value Rmax = 0 with i = 1 in step S16, the maximum value Rmax is set to Rmax = Rmin(i) in step S23, and the coordinates x5z, y5z are set to x5z = x5i, y5z = y5i in step S24. The variable i is updated in step S18, the minimum value Rmin(i) is determined in step S21, and the determined minimum value Rmin(i) is compared with the maximum value Rmax updated in step S23 in steps S22, S25.

As long as Rmin(i) > Rmax in step S22, the coordinates x5z, y5z where the halftone threshold data t(P5i) = 3 (z = 3) is set are successively updated. Thus, it is possible to determine the coordinates x5z, y5z spaced from any pixel points Pkn where the halftone threshold data t(Pkn) has already been set.

If Rmin(i) = Rmax in step S25, then a random number NEWRND which can have a value of 0 or 1 is determined in step S26, and compared with the random number RND set in step S16 in step S27. If NEWRND > RND, then random number RND is set to RND = NEWRND in step S28. The subsequently determined coordinates x5i, y5i are set to the coordinates x5z, y5z where the halftone threshold data t(P5i) = 3 (z = 3) is set in step S29. If NEWRND ≤ RND, then the initially determined coordinates x5i, y5i are set to the coordinates x5z, y5z where the halftone threshold data t(P5i) = 3 (z = 3) is set.

It is thus possible to extract a pixel point P5z at a position most largely spaced from the other pixel points Pkn where the halftone threshold data t(Pkn) has already been set, from among all the pixel points Pkn of the threshold matrix T5. The halftone threshold data t (Pkz) = 3 (z = 3) is set in the pixel points Pkz of each of the threshold matrixes Tk including the pixel point P5z in steps S19, S30.

Similarly, the process from step S14 is repeated to set the halftone threshold data t(Pkn) = 4 through 49 thereby to set halftone threshold data t(Pkn) for all the pixel points Pkn in the threshold matrixes Tk in step S15.

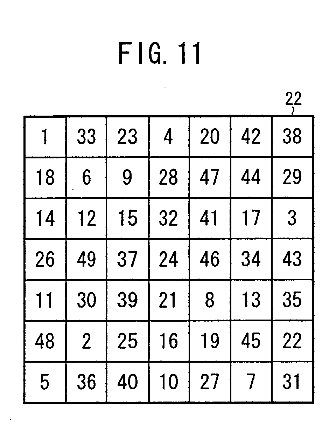

From the threshold matrixes Tk thus determined, there is extracted only the central threshold matrix T5. Finally, a 7 × 7 dispersed-dot ordered halftone threshold data pattern 22 shown in FIG. 11 is obtained.

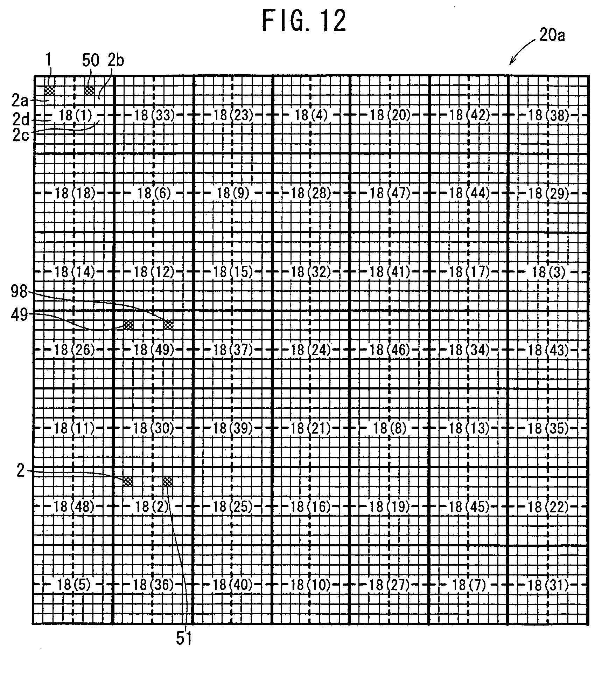

As shown in FIG. 12, a multiple halftone threshold pattern 20a comprising 49 auxiliary multiple halftone threshold patterns 18(1) through 18(49) each made up of four clustered-dot ordered halftone threshold patterns 2a through 2d is generated. The auxiliary multiple halftone threshold patterns 18(1) through 18(49) are successively selected in the order of halftone threshold data of the dispersed-dot ordered halftone threshold data pattern 22 shown in FIG. 11, and then halftone threshold data therefor are set therein, so that final halftone threshold data are determined.

Specifically, according to the rule shown in FIG. 11, the auxiliary multiple halftone threshold pattern 18(1) is first selected. Halftone threshold data "1" are placed in the halftone threshold pattern 2a according to the rule shown in FIG. 3. Then, the auxiliary multiple halftone threshold pattern 18(2) is selected, and halftone threshold data "2" are placed in the halftone threshold pattern 2a. Thereafter, halftone threshold data 1 through 3136 are placed according to the rules shown in FIGS. 3 and 11.

A halftone image generated using the multiple halftone threshold pattern 20a thus set is a smooth image free of periodic irregularities.

In the above embodiment, a clustered-dot ordered halftone threshold pattern is generated, an auxiliary multiple halftone threshold pattern is generated according to the array of halftone threshold data thereof, and a dispersed-dot ordered multiple halftone threshold pattern is generated according to the array of halftone threshold data thereof. However, a dispersed-dot ordered multiple halftone threshold pattern may be generated directly from the array of halftone threshold data of a clustered-dot ordered halftone threshold pattern.

If the halftone image generating apparatus has an output resolution ranging from 1000 to 1300 dpi (dots per inch) and a screen ruling ranging from 150 to 200 lpi (lines per inch), then the number of halftone threshold data making up one halftone threshold pattern should preferably be in the range from 4 to 100. If the size of dot cells produced according one halftone threshold pattern is smaller than 0.5 mm, then it is possible to make sufficiently less visible periodic density irregularities in a halftone image that is generated according to a multiple halftone threshold pattern.

Although a certain preferred embodiment of the present invention has been shown and described in detail, it should be understood that various changes and modifications may be made therein without departing from the scope of the appended claims.

## Claims

1. A method of generating halftone threshold data for converting continuous gradation image into halftone image data, comprising the steps of:

     generating a clustered-dot ordered array of halftone threshold data making up halftone threshold patterns (2a through 2d); and
     generating a dispersed-dot ordered array, between said halftone threshold patterns (2a through 2d), of halftone threshold data making up a multiple halftone threshold pattern (20) which is a collection of said halftone threshold patterns (2a through 2d).

2. A method according to claim 1, wherein said dispersed-dot ordered array of halftone threshold data comprises an array according to the spatial frequency characteristics of vision.

3. A method according to claim 2, wherein said dispersed-dot ordered array of halftone threshold data comprises a Bayer array.

4. A method according to claim 2, wherein said dispersed-dot ordered array of halftone threshold data between said halftone threshold patterns (2a through 2d) comprises a halftone threshold matrix (T5) composed of said halftone threshold patterns (2a through 2d) of said multiple halftone threshold pattern (20) and other halftone threshold matrixes (T1 through T4, T6 through T9) disposed around and identical to said halftone threshold matrix (T5), and wherein said halftone threshold patterns (2a through 2d) selected from said halftone threshold matrixes (T1 through T9) and said halftone threshold patterns (2a through 2d) selected following the selected halftone threshold patterns (2a through 2d) are selected in such an order as to be spaced most largely from the halftone threshold patterns (2a through 2d) which have already been selected.

5.  A method according to claim 1, further comprising the steps of:

   generating an array of halftone threshold data making up auxiliary multiple halftone threshold patterns (18a through 18r) by collecting the halftone threshold data of said halftone threshold patterns (2a through 2d); and
   generating a dispersed-dot ordered array, between said halftone threshold patterns (2a through 2d), of halftone threshold data making up said multiple halftone threshold pattern (20) by collecting the halftone threshold data of said auxiliary multiple halftone threshold patterns (18a through 18r).

6.  A method according to claim 1, wherein said halftone threshold data are generated for each of desired screen angles and screen rulings.

7.  An apparatus (30) for generating a halftone image (50) by converting continuous gradation image into halftone image data using halftone threshold data, comprising:

   a halftone threshold data memory (40) for storing halftone threshold data of a dispersed-dot ordered multiple halftone threshold pattern (20), between halftone threshold patterns (2a through 2d), of halftone threshold data composed of a collection of halftone threshold patterns (2a through 2d) each comprising a clustered-dot ordered array of halftone threshold data; and
   an image data converter (46) for converting said continuous gradation image into said halftone image data with said halftone threshold data.

8.  An apparatus according to claim 7, wherein said halftone threshold data memory (40) comprises means for storing said halftone threshold data for each of desired screen angles and screen rulings.

9.  An apparatus according to claim 7, wherein if said apparatus has an output resolution ranging from 1000 to 1300 dots per inch and a screen ruling ranging from 150 to 200 lpi lines per inch, then the number of halftone threshold data making up one halftone threshold pattern (2a through 2d) is in the range from 4 to 100 and the size of dot cells produced according said one halftone threshold pattern (2a through 2d) is smaller than 0.5 mm.

10. An apparatus according to claim 7, further comprising:

   a halftone image output unit (48) for outputting a halftone image on a recording medium based on said halftone image data converted by said image data converter (46).

11. A recording medium (36) for recording halftone threshold data for converting continuous gradation image into halftone image data, said halftone image data comprising a dispersed-dot ordered multiple halftone threshold pattern (20), between halftone threshold patterns (2a through 2d), of halftone threshold data composed of a collection of halftone threshold patterns (2a through 2d) each comprising a clustered-dot ordered array of halftone threshold data.

12. A recording medium (36) according to claim 11, for recording the halftone threshold data produced by collecting said halftone threshold patterns (2a through 2d) into auxiliary multiple halftone threshold patterns (18a through 18r), and collecting said auxiliary multiple halftone threshold patterns (18a through 18r) into said dispersed-dot ordered multiple halftone threshold pattern (20).

# FIG. 1

```
          ┌─────────────┐
          │    START    │
          └──────┬──────┘
                 │
    ┌────────────────────────┐  S1
    │   GENERATE HALFTONE     │
    │   THRESHOLD PATTERN     │
    └────────────┬───────────┘
                 │
    ┌────────────────────────┐  S2
    │    DETERMINE ARRAY      │
    └────────────┬───────────┘
                 │
    ┌────────────────────────┐  S3
    │   GENERATE AUXILIARY    │
    │   MULTIPLE HALFTONE     │
    │   THRESHOLD PATTERN     │
    └────────────┬───────────┘
                 │
    ┌────────────────────────┐  S4
    │    DETERMINE ARRAY      │
    └────────────┬───────────┘
                 │
    ┌────────────────────────┐  S5
    │   GENERATE MULTIPLE     │
    │  HALFTONE THRESHOLD     │
    │       PATTERN           │
    └────────────┬───────────┘
                 │
          ┌──────────────┐
          │     END      │
          └──────────────┘
```

# FIG. 2

| 14 | 10 | 6 | 15 |
|----|----|---|----|
| 5 | 1 | 2 | 11 |
| 9 | 4 | 3 | 7 |
| 13 | 8 | 12 | 16 |

# FIG. 3

|    |    | 2a |    |    |    | 2b |    |
|----|----|----|----|----|----|----|----|
| 57 | 37 | 21 | 57 | 54 | 38 | 22 | 58 |
| 17 | 1  | 5  | 41 | 18 | 2  | 6  | 42 |
| 33 | 13 | 9  | 25 | 34 | 14 | 10 | 26 |
| 49 | 29 | 45 | 61 | 50 | 30 | 46 | 62 |
| 56 | 40 | 24 | 60 | 55 | 39 | 23 | 59 |
| 20 | 4  | 8  | 44 | 19 | 3  | 7  | 43 |
| 36 | 16 | 12 | 28 | 35 | 15 | 11 | 27 |
| 52 | 32 | 48 | 64 | 51 | 31 | 47 | 63 |

18

2d        2c

# FIG. 4

# FIG. 5

FIG. 6

# FIG. 7

```
        ┌──────────────┐
        │    START     │
        └──────────────┘
               │
    ┌──────────────────────┐      S10
    │   DEFINE Tk, Pkn      │
    └──────────────────────┘
               │
    ┌──────────────────────┐      S11
    │ t(Pkn)=0 (k=1~9, n=1~49) │
    └──────────────────────┘
               │
    ┌──────────────────────┐      S12
    │ t(Pk1)=1             │
    │ t(Pk2)=2    (k=1~9)  │
    └──────────────────────┘
               │
    ┌──────────────────────┐      S13
    │        z=2           │
    └──────────────────────┘
               │ ←──────────────────  ②
    ┌──────────────────────┐      S14
    │        z=z+1         │
    └──────────────────────┘
               │
          S15
          ╱──────╲          YES
         ╱  z=50  ╲───────────────┐
         ╲        ╱               │
          ╲──────╱           ┌─────────┐
             │ NO            │   END   │
    ┌──────────────┐  S16    └─────────┘
    │   Rmax=0     │
    │   RND=0      │
    └──────────────┘
          │
         ①
```

# FIG. 8

```
        ( 1 )
          │
          ▼
  ┌─────────────────┐  S17
  │      i=0        │
  └─────────────────┘
          │
          ▼
  ┌─────────────────┐  S18
  │     i=i+1       │
  └─────────────────┘
          │
          ▼         S19        YES
       ╱────────╲────────────────────┐
      ╱   i=50   ╲                    │
      ╲          ╱                    ▼
       ╲────────╱          ┌─────────────────┐  S30
          │ NO             │    t(Pkz)=z      │
          ▼         S20    └─────────────────┘
  NO   ╱────────╲                    │
 ◄────╱ t(P5i)=0 ╲                   ▼
      ╲          ╱                 ( 2 )
       ╲────────╱
          │ YES
          ▼
  ┌─────────────────┐  S21
  │ CALCULATE Rmin(i)│
  └─────────────────┘
          │
          ▼         S22   NO                    S25   NO
       ╱────────╲────────────►╱────────╲───────────────►
      ╱ Rmin(i)> ╲           ╱ Rmin(i)= ╲
      ╲   Rmax   ╱           ╲   Rmax   ╱
       ╲────────╱             ╲────────╱
          │ YES                  │ YES
          ▼                      ▼
  ┌─────────────────┐ S23  ┌─────────────────┐ S26
  │  Rmax=Rmin(i)   │      │ GENERATE NEWRND │
  └─────────────────┘      └─────────────────┘
          │                      │
          ▼                      ▼         S27   NO
  ┌─────────────────┐ S24     ╱────────╲──────────►
  │    x5z=x5i      │        ╱NEWRND>RND ╲
  │    y5z=y5i      │        ╲          ╱
  └─────────────────┘         ╲────────╱
          │                      │ YES
          │                      ▼
          │              ┌─────────────────┐ S28
          │              │   RND=NEWRND    │
          │              └─────────────────┘
          │                      │
          │                      ▼
          │              ┌─────────────────┐ S29
          │              │    x5z=x5i      │
          │              │    y5z=y5i      │
          │              └─────────────────┘
          │                      │
          ▼                      ▼
```

EP 1 307 041 A2

# F I G. 9

START

S40 — Rmin(i)=99999

S41 — k=0

S42 — j=0

S43 — k=k+1

S44 — n=n+1

S45 — k=10 — YES → RETURN

NO

S46 — n=50 — YES

NO

S47 — t(Pkn)=0 — YES →

NO

S48 — $RR=\sqrt{(xkn-x5i)^2+(ykn-y5i)^2}$

S49 — RR<Rmin(i) — NO →

YES

S50 — Rmin(i)=RR

# FIG. 10

## FIG. 11

# FIG. 12

FIG. 13

EP 1 307 041 A2

FIG. 14

# FIG. 15

## FIG. 16